# FASCICULE DE BREVET EUROPEEN

(11) **EP 3 978 285 B1**
(45) Date de publication et mention de la délivrance du brevet: **13.05.2026**
(21) Numéro de dépôt: 21197884.6
(22) Date de dépôt: 21.09.2021
(51) Int. Cl.: B60K 6/24, B60K 6/46, B60W 20/13, F02B 75/04, F02D 15/00, F02D 15/02, B60L 50/10

(54) **PROCÉDÉ DE GESTION D'UN NIVEAU DE CHARGE D'UN ÉLÉMENT DE STOCKAGE D'ÉNERGIE ÉLECTRIQUE D'UN GROUPE MOTOPROPULSEUR, AINSI QUE GROUPE MOTOPROPULSEUR ET VÉHICULE**
VERFAHREN ZUR VERWALTUNG EINES LADEZUSTANDS EINES ELEKTRISCHEN ENERGIESPEICHERELEMENTS EINER ANTRIEBSEINHEIT, SOWIE ANTRIEBSEINHEIT UND FAHRZEUG
METHOD FOR MANAGING A CHARGE LEVEL OF AN ELECTRICAL ENERGY STORAGE ELEMENT FOR A POWER TRAIN, POWERTRAIN AND VEHICLE

(30) Priorité: 02.10.2020 FR 2010078
(43) Date de publication de la demande: 06.04.2022
(73) Titulaire: Horse Powertrain Solutions, S.L.U., 28108 Alcobendas, Madrid (ES)
(72) Inventeur: CHRISTOU, Panagiotis, 78084 guyancourt (FR); MILLON, Jean-Pierre, 78870 Bailly (FR); POMMERY, William, 95560 MONTSOULT (FR)
(74) Mandataire: Elzaburu S.L.P.

(56) Documents cités:
- EP-A1- 3 418 532
- EP-A2- 1 462 637
- WO-A1-2020/170634
- DE-A1- 102010 024 896

## Description

La présente invention se rapporte au domaine des groupes motopropulseurs hybrides et concerne plus particulièrement un procédé de gestion d'un niveau de charge d'un élément de stockage d'énergie électrique au sein d'un tel groupe motopropulseur.

La technologie hybride consiste en une association entre un moteur thermique et un moteur électrique, chacun participant au fonctionnement du véhicule, entraînant ainsi une consommation de carburant plus faible, et ce dans un but notamment de préservation environnementale.

Parmi les différentes technologies hybrides existantes au sein de l'industrie automobile, certaines d'entre elles consistent en une propulsion du véhicule intégralement générée par le moteur électrique, une fonction principale du moteur thermique étant de recharger un élément de stockage d'énergie électrique fournissant l'énergie électrique au moteur électrique. Ces technologies sont usuellement désignées comme les technologies « hybride-série ». Un cas d'usage particulier de ces technologies « hybride-série » est le prolongateur d'autonomie (ou « range extender » en anglais), qui consiste, une fois que l'autonomie électrique du véhicule est nulle (i.e. batterie vide), à démarrer le moteur thermique pour recharger la batterie et ainsi permettre de prolonger l'autonomie du véhicule, jusqu'à une borne de recharge électrique par exemple.

Un inconvénient de ce type de groupe motopropulseur est que le moteur thermique fonctionne selon un unique point de fonctionnement. Lorsque le moteur thermique ne présente qu'un seul point de fonctionnement, l'énergie qui en découle et qui est transmise à l'élément de stockage d'énergie électrique est constante au cours du temps. De ce fait, en fonction de la consommation électrique du véhicule, il arrive que l'apport en énergie du moteur thermique vers l'élément de stockage d'énergie électrique soit insuffisant ou soit au contraire trop élevé.

Un apport en énergie insuffisant conduit à un déchargement de l'élément de stockage d'énergie électrique sur le moyen terme ou le long terme, et a donc tendance à réduire l'autonomie du véhicule. A l'inverse, si le moteur thermique fonctionne selon un unique point de fonctionnement entraînant une activité élevée du moteur thermique, et ce de manière constante, alors le moteur thermique a tendance à s'user plus rapidement.

Par exemple, le document WO2020170634 décrit un procédé présentant ce type d'inconvénient.

DE 10 2010 024896 A1 présente une entraînement hybride modulaire, notamment pour la propulsion des voitures particulières. L'entraînement est doté d'une unité d'entraînement électrodynamique fonctionnant en option comme générateur électrique. Une unité d'entraînement thermodynamique comprend un moteur à combustion à quatre temps, où la commande interactive du gaz de l'unité d'entraînement thermodynamique s'effectue via des servo-vannes rotatives. Les deux unités d'entraînement et une unité d'accouplement sont formées sous forme de modules séparés combinés dans un agencement en série, et reliés mécaniquement aux deux extrémités axiales d'un arbre de travail à l'aide d'une technique de connexion standardisée de telle sorte que la puissance de chaque module d'un agencement en série soit transférée à l'arbre de travail.

EP 3418532 A1 présente un dispositif de réglage de taux de compression d'un moteur à combustion interne. Ce dispositif de réglage comprenant: une bielle comprenant un pied de bielle, une tête de bielle destinée à recevoir un vilebrequin du moteur et un corps de bielle reliant le pied à la tête; un piston comprenant un arbre de piston; un excentrique comprenant un arbre principal installé au niveau du pied de bielle et comportant un alésage excentrique recevant l'arbre de piston; un levier coopérant avec l'arbre principal de manière à faire tourner l'arbre principal sur lui-même par le basculement du levier ; au moins un élément de manoeuvre étant relié d'une part au corps de bielle et d'autre part au levier de manière à faire basculer le levier. Selon l'invention, la bielle et l'élément de manoeuvre sont respectivement réalisés dans des matériaux présentant des coefficients de dilatation thermique différents.

La présente invention vise à pallier un tel inconvénient en proposant un procédé de gestion d'un niveau de charge d'un élément de stockage d'énergie électrique d'un groupe motopropulseur d'un véhicule automobile hybride, ledit groupe motopropulseur comprenant au moins un moteur électrique entraînant à lui seul le véhicule, au moins un groupe électrogène comprenant un moteur thermique entraînant une génératrice électrique, le moteur thermique étant apte à fonctionner à au moins deux taux de compression, l'élément de stockage d'énergie électrique stockant l'énergie électrique produite par la génératrice, le procédé de gestion contrôlant le moteur thermique à un premier taux de compression ou à un deuxième taux de compression en fonction du niveau de charge de l'élément de stockage d'énergie électrique et/ou d'une consommation électrique du moteur électrique, caractérisé en ce qu' on maintient le moteur thermique au premier taux de compression quand le niveau de charge de l'élément de stockage d'énergie électrique est supérieur à un seuil bas d'état de charge et inférieur à un seuil haut d'état de charge, le seuil haut d'état de charge étant supérieur au seuil bas d'état de charge, et on bascule le moteur thermique au deuxième taux de compression quand le niveau de charge de l'élément de stockage d'énergie électrique est inférieur au seuil bas d'état de charge. Selon l'invention, le deuxième taux de compression est le plus élevé des deux taux de compression.

Ainsi, avec un moteur thermique présentant deux taux de compression, l'apport en énergie électrique fournie par la génératrice électrique peut être adapté pour correspondre à une consommation du moteur électrique, tout en limitant une potentielle suractivité superflue du moteur thermique pouvant accélérer son usure à moyen ou long terme.

Le moteur électrique est directement relié à une chaine de traction du véhicule et gère la propulsion de ce dernier. Par gestion de la propulsion du véhicule par le moteur électrique à lui seul, il faut comprendre que la propulsion du véhicule est uniquement assurée par le moteur électrique, le moteur thermique n'intervenant à aucun moment dans la mise en mouvement du véhicule.

Le moteur électrique est alimenté électriquement par l'élément de stockage d'énergie électrique. Ce dernier est par exemple une batterie apte à garder en réserve une quantité d'énergie électrique afin de la fournir au moteur électrique, à la demande de ce dernier. Le niveau de charge de l'élément de stockage d'énergie électrique diminue lorsque le moteur électrique est en fonctionnement et que l'élément de stockage d'énergie électrique n'est pas rechargé simultanément. La vitesse de consommation de l'énergie électrique par le moteur électrique peut varier en fonction de plusieurs paramètres liés au véhicule, par exemple son poids ou encore la vitesse à laquelle le véhicule roule.

Le groupe électrogène a pour fonction d'alimenter électriquement l'élément de stockage d'énergie électrique suscité, c'est-à-dire de maintenir ou d'augmenter le niveau de charge de ce dernier. Le moteur thermique comprend un équipage mobile pourvu notamment d'au moins un piston compressant un mélange comburé afin de générer une explosion et de ce fait une énergie mécanique. Cette énergie mécanique est transmise à la génératrice électrique qui a pour rôle de convertir l'énergie mécanique générée par le moteur thermique en énergie électrique. Cette énergie électrique est alors transmise à l'élément de stockage d'énergie électrique de manière à le charger.

Le moteur thermique est un moteur dit à deux taux de compression, relativement aux pistons contenus dans le moteur pouvant compresser selon deux taux de compression différents. Ainsi, le mélange comburé est compressé dans les chambres de combustion du piston de manière plus ou moins forte. Plus le taux de compression est élevé, plus l'énergie mécanique qui résulte de l'explosion est importante. Ainsi, si le moteur thermique peut fonctionner selon deux taux de compression différent, cela signifie que le moteur thermique peut générer de l'énergie mécanique à deux niveaux différents. La génératrice électrique qui est directement reliée au moteur thermique fourni ainsi deux niveaux de charge différents.

On comprend que selon un aspect de l'invention le moteur thermique est mis en fonctionnement uniquement selon le premier taux de compression ou selon le deuxième taux de compression.

Le premier taux de compression est inférieur au deuxième taux de compression. L'énergie mécanique générée par le moteur thermique est ainsi moins importante si le moteur thermique fonctionne selon le premier taux de compression que s'il fonctionne selon le deuxième taux de compression.

Grâce aux deux taux de compression du moteur thermique, la génératrice électrique peut ainsi fournir un apport en énergie électrique adapté à une consommation de l'énergie électrique stockée par l'élément de stockage d'énergie électrique et consommée par le moteur électrique.

Le procédé de gestion du niveau de charge de l'élément de stockage d'énergie électrique permet de déterminer le taux de compression optimale relatif à un niveau de charge particulier et peut également basculer d'un taux de compression à l'autre toujours en fonction du niveau de charge de l'élément de stockage d'énergie électrique. Un tel procédé de gestion permet ainsi de prolonger l'autonomie électrique du véhicule, mais sans pour autant entraîner une surexploitation du moteur thermique.

Le basculement d'un taux de compression à l'autre peut également dépendre de la consommation électrique du moteur électrique. La consommation électrique est majoritairement dépendante de la vitesse du véhicule. Ainsi, plus le véhicule roule à une vitesse élevée, plus la consommation électrique est importante.

En fonction de la vitesse du véhicule, par exemple si ce dernier roule en ville ou sur une autoroute, le taux de compression du moteur thermique peut basculer afin de s'adapter à la consommation électrique du moteur électrique résultante de ladite vitesse du véhicule.

Le premier taux de compression étant le plus faible, il est possible que malgré la génération d'énergie du groupe électrogène, le niveau de charge de l'élément de stockage d'énergie électrique diminue, et ce du fait que le moteur électrique consomme l'énergie électrique plus rapidement que le moteur thermique combiné à la génératrice électrique n'en apporte. Dans cette situation, le niveau de charge de l'élément de stockage d'énergie électrique diminue.

Le niveau de charge de l'élément de stockage d'énergie électrique peut être inférieur au seuil bas d'état de charge. Le fait de franchir ce seuil bas d'état de charge est un indicateur que la consommation de l'énergie électrique est trop élevée par rapport à l'apport en énergie électrique du groupe électrogène. Le procédé de gestion permet donc de basculer le moteur thermique selon le deuxième taux de compression, qui est le plus élevée des deux taux de compression, et ainsi d'augmenter l'énergie mécanique que génère le moteur thermique. Le fait de basculer vers le deuxième taux de compression garantit une augmentation du niveau de charge de l'élément de stockage d'énergie électrique, ou dans le pire des cas, un ralentissement de la baisse du niveau de charge de l'élément de stockage d'énergie électrique si le moteur électrique consomme de manière trop importante.

Le moteur thermique est maintenu au premier taux de compression tant que le niveau de charge de l'élément de stockage d'énergie électrique est inférieur au seuil haut d'état de charge. Le seuil haut d'état de charge correspond à un niveau de charge élevé se rapprochant d'un niveau de charge maximal de l'élément de stockage d'énergie électrique.

Selon une caractéristique du procédé, on maintient le moteur thermique au deuxième taux de compression après que le niveau de charge de l'élément de stockage d'énergie électrique devienne inférieur au seuil bas d'état de charge et tant que le niveau de charge de l'élément de stockage d'énergie électrique est inférieur au seuil haut d'état de charge, et on interrompt le fonctionnement du moteur thermique quand le niveau de charge de l'élément de stockage d'énergie électrique est supérieur au seuil haut d'état de charge.

Le principe est le même que pour un franchissement du seuil bas d'état de charge évoqué précédemment mais ici pour un niveau de charge élevé. Une fois que le niveau de charge de l'élément de stockage d'énergie électrique a franchi le seuil bas d'état de charge et est inférieur à celui-ci, le moteur thermique est basculé selon le deuxième taux de compression tel que cela a été décrit précédemment. L'énergie générée par le groupe électrogène permet alors d'augmenter le niveau de charge de l'élément de stockage d'énergie électrique. Lorsque ce dernier franchit le seuil haut d'état de charge et devient supérieur à celui-ci, le moteur thermique se stoppe afin d'économiser le carburant du véhicule, le niveau de charge de l'élément de stockage d'énergie électrique étant suffisamment élevé pour que l'élément de stockage d'énergie électrique ne nécessite pas d'être approvisionné par l'énergie électrique générée par le groupe électrogène. Le fait d'arrêter le moteur thermique permet également de réduire les émissions de polluants.

Selon une caractéristique du procédé, on maintient le moteur thermique éteint tant que le niveau de charge de l'élément de stockage d'énergie électrique est supérieur au seuil haut d'état de charge, et on met en fonctionnement le moteur thermique quand le niveau de charge de l'élément de stockage d'énergie électrique est rendu inférieur au seuil haut d'état de charge. Un niveau de charge supérieur au seuil haut d'état de charge est un niveau de charge suffisant pour que le groupe électrogène n'ait pas à générer de l'énergie. Le moteur thermique peut donc être éteint durant un laps de temps pendant lequel le niveau de charge de l'élément de stockage d'énergie électrique reste supérieur au seuil haut d'état de charge.

Dès que le niveau de charge franchit le seuil haut d'état de charge et devient inférieur à celui-ci, le moteur thermique est démarré. Lors du démarrage, le moteur thermique peut par exemple être opéré par défaut selon le premier taux de compression, ou bien être opéré selon le taux de compression le plus compatible avec la consommation électrique du moteur électrique au moment du démarrage du moteur thermique, par exemple selon le deuxième taux de compression si le moteur électrique consomme une quantité importante d'énergie électrique.

Selon une caractéristique du procédé, le seuil bas d'état de charge est compris entre 5% et 60% d'un niveau de charge maximal de l'élément de stockage d'énergie électrique.

Selon une caractéristique du procédé, le seuil haut d'état de charge est compris entre 40% et 100% d'un niveau de charge maximal de l'élément de stockage d'énergie électrique.

Selon une caractéristique du procédé, on contrôle le moteur thermique au premier taux de compression ou au deuxième taux de compression en fonction de la consommation électrique du moteur électrique, tant que le niveau de charge de l'élément de stockage d'énergie électrique est inférieur au seuil haut d'état de charge et supérieur au seuil bas d'état de charge. Comme cela a été dit précédemment, le moteur thermique est à l'arrêt tant que le niveau de charge de l'élément de stockage d'énergie électrique est supérieur au seuil haut d'état de charge et est par défaut opéré selon le deuxième taux de compression lorsque le niveau de charge passe en-dessous du seuil bas d'état de charge.

Dans les autres cas de figures, le taux de compression du moteur thermique peut basculer vers l'un ou l'autre des deux taux de compression en fonction de la consommation électrique du moteur électrique, notamment relative à la vitesse du véhicule. Plus la vitesse du véhicule est élevée, plus le procédé de gestion a tendance à faire basculer le moteur thermique vers le deuxième taux de compression.

Selon une caractéristique du procédé, le changement de taux de compression du moteur thermique est régi par un module de pilotage. Le module de pilotage est un élément apte à recevoir des informations et à émettre des commandes en fonction des informations reçues. Le module de pilotage est donc en mesure de commander le moteur thermique pour que ce dernier bascule du premier taux de compression au deuxième taux de compression, et inversement.

Le module de pilotage reçoit une indication de l'état de charge de l'élément de stockage d'énergie électrique. C'est à partir de cette indication que le module de pilotage décide d'envoyer ou non la commande au moteur thermique pour que celui-ci change de taux de compression. Le module de pilotage, après avoir reçu le niveau de charge de l'élément de stockage d'énergie électrique, compare ce dernier avec le seuil haut ou bas d'état de charge et commande au moteur thermique de changer ou non de taux de compression.

Selon une caractéristique du procédé, le module de pilotage reçoit une indication de la consommation électrique du moteur électrique. Tout comme pour la réception de l'indication du niveau de charge de l'élément de stockage d'énergie électrique, le module de pilotage peut recevoir une évolution de la consommation électrique du moteur électrique. Cette indication peut être fournie par le moteur électrique ou bien par l'élément de stockage d'énergie électrique. La réception de l'indication de la consommation électrique du moteur électrique peut permettre le basculement du taux de compression de manière à ce qu'il soit adapté à ladite consommation électrique. L'invention couvre également un groupe motopropulseur pour véhicule automobile mettant en œuvre un procédé de gestion d'un niveau de charge d'un élément de stockage d'énergie électrique tel que décrit précédemment. Afin de mener à bien la mise en œuvre du procédé de gestion du niveau de charge de l'élément de stockage d'énergie électrique, le groupe motopropulseur comprend l'ensemble des éléments évoqués jusqu'à présent, à savoir le moteur électrique, l'élément de stockage d'énergie électrique et le groupe électrogène pourvu du moteur thermique et de la génératrice électrique.

Selon une caractéristique de l'invention, le moteur thermique comprend un équipage mobile pourvu d'au moins un vilebrequin, d'au moins un piston, et d'au moins une bielle liant le piston au vilebrequin, ladite bielle comprenant un moyen de réglage d'une hauteur du piston pour opérer le moteur thermique au premier taux de compression ou au deuxième taux de compression. Le vilebrequin, par l'intermédiaire de la bielle, entraîne le piston dans un cylindre. C'est le piston qui va ainsi comprimer le gaz présent dans le cylindre. C'est suite à une telle compression que l'énergie mécanique est générée par la moteur thermique, énergie qui par la suite est fournie à l'élément de stockage d'énergie électrique après conversion en énergie électrique par la génératrice électrique.

La bielle comprend une première extrémité reliée au vilebrequin et une deuxième extrémité reliée au piston. Le vilebrequin génère un mouvement rotatif qui, par l'intermédiaire de la bielle, devient un mouvement de translation du piston au sein du cylindre.

Le moyen de réglage de la hauteur du piston agit au niveau de la bielle afin que cette dernière entraîne le piston de manière à ce que celui-ci comprime le gaz dans la chambre de combustion de manière plus ou moins forte. C'est grâce à ce moyen de réglage que le moteur thermique peut varier entre le premier taux de compression et le deuxième taux de compression. Ainsi, lorsque le moyen de pilotage évoqué précédemment envoie une commande au moteur thermique entraînant un changement du taux de compression, c'est plus particulièrement le moyen de réglage qui s'active et qui modifie la hauteur du piston afin que ce dernier comprime de manière plus ou moins importante.

Selon une caractéristique de l'invention, le moyen de réglage de la hauteur du piston comprend au moins un excentrique qui porte un axe du piston et dont la position est contrôlée par deux organes de pilotage portés par la bielle. L'excentrique est situé au niveau de la liaison entre la bielle et le piston. Les deux organes de pilotage sont aptes à modifier la position de l'excentrique, par exemple grâce à un circuit d'huile, ou bien un système à ressort. Lorsque l'excentrique change de position, la position de la hauteur du piston est modifiée, entraînant ainsi une variation de la compression exercée par le piston, et ainsi modifiant le taux de compression du moteur thermique.

L'invention couvre également un véhicule automobile comprenant un groupe motopropulseur tel que décrit précédemment, le moteur électrique de mise en mouvement du véhicule automobile étant alimenté électriquement par l'élément de stockage d'énergie électrique tandis que le groupe électrogène charge électriquement l'élément de stockage d'énergie électrique. Comme cela a été décrit précédemment, la propulsion d'un tel véhicule automobile est entièrement électrique. En fonction du type de véhicule, les deux taux de compression du groupe motopropulseur peuvent varier. Ainsi, à titre d'exemple, les taux de compression du moteur thermique d'un véhicule utilitaire diffèrent des taux de compression du moteur thermique d'une voiture citadine, les besoins en énergie électrique consommée par le moteur électrique n'étant pas les mêmes.

Selon un autre exemple, les deux taux de compression sont identiques et c'est un taux d'utilisation de chacun des deux taux de compression qui varie en fonction du type du véhicule. Ainsi un véhicule citadin aura tendance à utiliser majoritairement le premier taux de compression, tandis qu'un véhicule utilitaire, de par son poids lorsqu'il est chargé par exemple, aura tendance à utiliser majoritairement le deuxième taux de compression. Un tel exemple permet ainsi une standardisation de la fabrication du moteur thermique.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est un schéma général d'un groupe motopropulseur apte à mettre en œuvre un procédé de gestion d'un niveau de charge d'un élément de stockage d'énergie électrique selon l'invention,
[fig 2] est un graphique détaillant un déroulé du procédé de gestion,
[fig 3] est un schéma d'un équipage mobile d'un moteur thermique qui équipe le groupe motopropulseur selon l'invention,
[fig 4] est un schéma d'une bielle de cet équipage mobile.

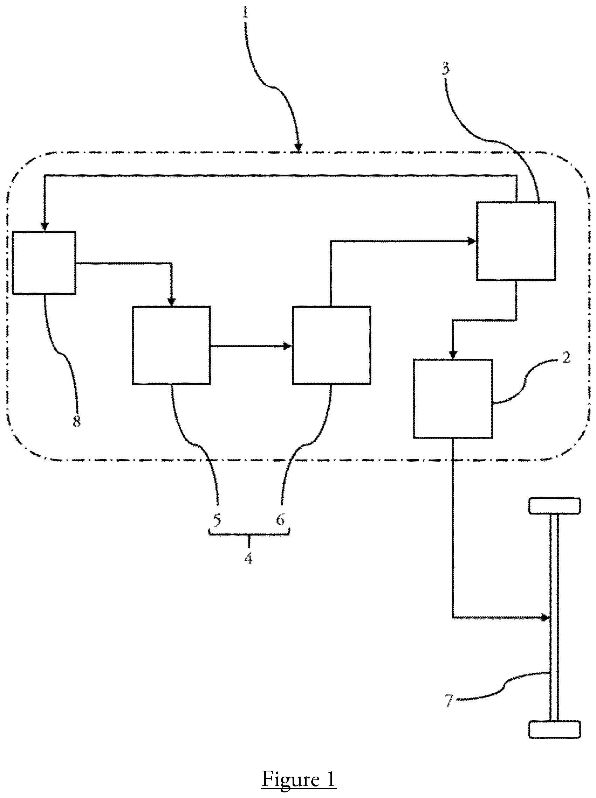

Le figure 1 représente un groupe motopropulseur 1 disposé au sein d'un véhicule automobile hybride. Ce groupe motopropulseur 1 comprend un moteur électrique 2 et un groupe électrogène 4 pourvu d'un moteur thermique 5. Il s'agit donc d'un groupe motopropulseur 1 de type hybride-série. La particularité du groupe motopropulseur 1 selon l'invention est que seul le moteur électrique 2 assure une mise en mouvement du véhicule. Le moteur thermique 5 ne présente donc aucune fonction de propulsion du véhicule. De ce fait, seul le moteur électrique 2 est relié à une chaîne de traction 7 du véhicule.

Le groupe motopropulseur 1 comprend un élément de stockage d'énergie électrique 3. L'élément de stockage d'énergie électrique 3 a pour fonction de stocker une énergie électrique et d'alimenter le moteur électrique 2 en énergie électrique afin que ce dernier puisse assurer sa fonction de propulsion. L'élément de stockage d'énergie électrique 3 peut par exemple être une batterie qui emmagasine de l'énergie électrique afin de restituer cette dernière au moteur électrique 2, à la demande de ce dernier. Lorsque le véhicule est immobile, l'élément de stockage d'énergie électrique 3 peut être rechargé par exemple via un réseau électrique domestique ou urbain.

Lorsque le véhicule est en fonctionnement, l'élément de stockage d'énergie électrique 3 est rechargé par le groupe électrogène 4 qui est donc embarqué dans le véhicule. Le moteur thermique 5 quant à lui fonctionne par injection de carburant. Lorsque le moteur thermique 5 est en fonctionnement, celui-ci génère une énergie mécanique. Les détails concernant la génération d'énergie mécanique par le moteur thermique 5 seront décrits par la suite.

Le groupe électrogène 4 comprend également une génératrice électrique 6. La génératrice électrique 6 reçoit l'énergie mécanique générée par le moteur thermique 5 et transforme cette dernière en énergie électrique. Ceci étant fait, la génératrice électrique 6 transmet l'énergie électrique à l'élément de stockage d'énergie électrique 3. Ainsi, lorsque le véhicule est en fonctionnement et roule, le moteur électrique 2, afin de d'entraîner la propulsion du véhicule, consomme l'énergie électrique stockée par l'élément de stockage d'énergie électrique 3. Cependant, le moteur thermique 5 étant également en fonctionnement, l'élément de stockage d'énergie électrique 3 reçoit un apport en énergie électrique de la part du groupe électrogène 4, plus particulièrement de la génératrice électrique 6. L'élément de stockage d'énergie électrique 3 sert donc simultanément à alimenter électriquement le moteur électrique 2 et à stocker l'énergie électrique fournie par la génératrice électrique 6.

La consommation électrique par le moteur électrique 2 peut varier au cours d'un trajet effectué par le véhicule. Ainsi, le moteur électrique 2 consomme plus d'énergie électrique par exemple si le véhicule roule sur une autoroute, ou plus généralement si la vitesse du véhicule est élevée. De ce fait, il est possible que l'élément de stockage d'énergie électrique 3 se décharge plus vite qu'il ne se recharge.

Il peut également arriver que l'élément de stockage d'énergie électrique 3 ne se recharge plus vite qu'il ne se décharge. Dans cette situation, lorsque l'élément de stockage d'énergie électrique 3 est entièrement chargé ou presque entièrement chargé, il est inutile de faire fonctionner le moteur thermique 5, l'énergie électrique emmagasinée par l'élément de stockage d'énergie électrique 3 étant suffisante. Faire fonctionner le moteur thermique 5 de manière à générer de l'énergie en quantité excessive est donc superflu et accélère l'usure du moteur thermique 5. Il est donc important de limiter l'usure du moteur thermique 5, mais sans pour autant vider entièrement l'élément de stockage d'énergie électrique 3 conduisant à une réduction de l'autonomie du véhicule.

Pour réguler un niveau de charge de l'élément de stockage d'énergie électrique 3, le moteur thermique 5 est un moteur thermique dit à deux taux de compression. Autrement dit, le moteur thermique 5 peut fonctionner selon un premier taux de compression ou selon un deuxième taux de compression, ces deux taux de compression étant différents l'un par rapport à l'autre, et le deuxième taux de compression étant le plus élevée des deux taux de compression.

Le fait de modifier le taux de compression du moteur thermique 5 modifie une quantité d'énergie mécanique transmise à la génératrice électrique 6 et donc à l'élément de stockage d'énergie électrique 3. Ainsi, le moteur thermique 5 est apte à générer une quantité d'énergie mécanique qui correspond à une quantité d'énergie électrique consommée par le moteur électrique 2, afin que le niveau de charge de l'élément de stockage d'énergie électrique 3 oscille sans complètement se décharger ou être complètement chargée.

Afin de contrôler le niveau de charge de l'élément de stockage d'énergie électrique 3, le groupe motopropulseur 1 comprend un module de pilotage 8. Le module de pilotage 8 reçoit des indications relatives au niveau de charge de l'élément de stockage d'énergie électrique 3 ainsi qu'à la consommation électrique du moteur électrique 2, également transmises par le biais de l'élément de stockage d'énergie électrique 3. Ces indications peuvent être transmises en temps réel, ou encore de manière ponctuelle à intervalle de temps régulier. En fonction du niveau de charge reçu et/ou de la consommation électrique du moteur électrique 2, le module de pilotage 8 est apte à transmettre une commande au moteur thermique 5 afin que ce dernier bascule du premier taux de compression au deuxième taux de compression, ou inversement en fonction du niveau de charge reçu de l'élément de stockage d'énergie électrique 3, de la consommation électrique du moteur électrique 2 et du taux de compression du moteur thermique 5 à l'instant t. Afin que le groupe motopropulseur 1 puisse fonctionner de la sorte, celui-ci est apte à mettre en œuvre un procédé de gestion du niveau de charge de l'élément de stockage d'énergie électrique 3 et/ou de la consommation électrique du moteur électrique 2 tel que décrit ci-dessous.

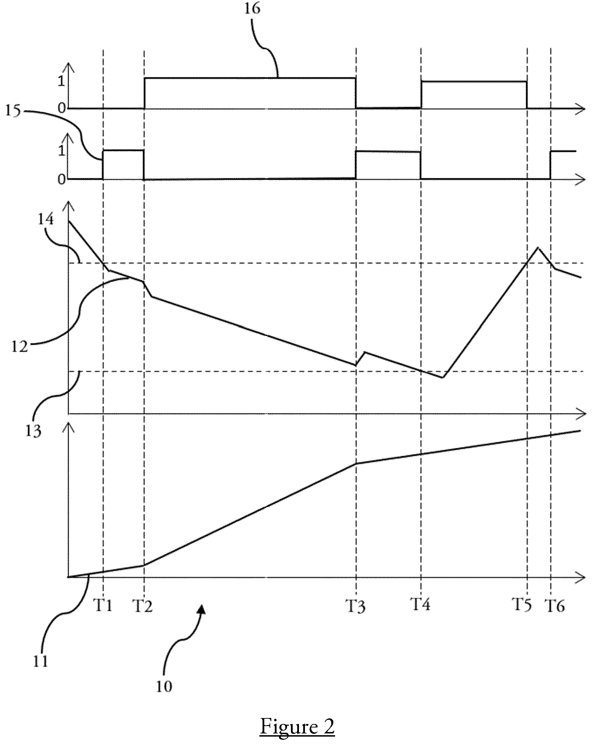

La figure 2 est une illustration graphique du procédé de gestion 10 du niveau de charge 12 de l'élément de stockage d'énergie électrique. La figure 2 se présente sous la forme de quatre courbes évoluant en fonction du temps. Ainsi, si l'on parcourt chacune des courbes de bas en haut de la figure 2, la première courbe représente une évolution de la consommation électrique 11 par le moteur électrique au cours du temps, la deuxième courbe représente une évolution du niveau de charge 12 de l'élément de stockage d'énergie électrique au cours du temps, la troisième courbe représente une activité du premier taux de compression 15 du moteur thermique au cours du temps, et la quatrième courbe représente une activité du deuxième taux de compression 16 du moteur thermique au cours du temps.

Concernant les courbes d'activité des taux de compression 15, 16 du moteur thermique, la position 1 signifie que le moteur thermique fonctionne au taux de compression concerné, tandis que la position 0 signifie que le moteur thermique n'utilise pas le taux de compression concerné. Le moteur thermique ne pouvant fonctionner que selon un unique taux de compression à la fois, lorsque l'un des taux de compression est utilisé, l'autre taux de compression est nécessairement non utilisé.

Concernant la courbe d'évolution du niveau de charge 12 de l'élément de stockage d'énergie électrique, le graphique associé comprend deux droites horizontales représentées en pointillés. Ces droites correspondent à un seuil bas d'état de charge 13 et à un seuil haut d'état de charge 14.

Le déroulé du temps pour l'ensemble des courbes correspond à un trajet effectué par un véhicule pourvu du groupe motopropulseur décrit précédemment. Ainsi, au démarrage du véhicule, la consommation électrique 11 est nulle. A l'inverse, le niveau de charge 12 est maximal, par exemple suite à une recharge complète de l'élément de stockage d'énergie électrique avant démarrage.

Au démarrage, le véhicule roule à vitesse modérée, par exemple en cycle urbain. La consommation électrique 11 augmente donc mais de manière faible. Du fait du niveau de charge 12 maximal, le moteur thermique est éteint, donc ne fonctionne selon aucun des deux taux de compression 15, 16. Du fait de l'inactivité du moteur thermique, le niveau de charge 12 baisse.

Cette baisse du niveau de charge est telle que représentée sur la figure 2, jusqu'à un premier instant T1. Le premier instant T1 correspond au moment où le niveau de charge 12 de l'élément de stockage d'énergie électrique franchit et devient inférieur au seuil haut d'état de charge 14. Un franchissement du seuil haut d'état de charge 14 entraîne l'allumage du moteur thermique afin que celui-ci puisse générer de l'énergie mécanique pouvant être convertie par la génératrice électrique afin de recharger l'élément de stockage d'énergie électrique. La consommation électrique 11 étant toujours en faible augmentation, c'est donc le premier taux de compression 15 qui est utilisé, et passe donc en position 1 comme représenté sur la figure 2.

Ainsi, l'apport en énergie par le groupe électrogène étant sensiblement équivalent à la consommation électrique 11, le niveau de charge 12 continue de baisser, mais de manière plus légère que lors de la période de temps antérieure au premier instant T1. Il est possible d'observer un léger temps de latence entre l'allumage du moteur thermique et le changement de la pente du niveau de charge 12 de l'élément de stockage d'énergie électrique. Ce temps de latence correspond au temps nécessaire au moteur thermique entre son allumage et sa génération d'énergie mécanique de manière régulière. Conformément à ce qui a été décrit en figure 1, le module de pilotage reçoit en direct ou de manière régulière le niveau de charge 12 de l'élément de stockage d'énergie électrique et a pu ainsi, au premier instant T1, entraîner la mise en fonctionnement du moteur thermique.

L'évolution de chacun des paramètres du procédé de gestion 10 se poursuit de la sorte, et ce jusqu'à un deuxième instant T2. A partir du deuxième instant T2, la consommation électrique 11 du véhicule augmente brusquement. Cette augmentation peut être due à une augmentation de la vitesse moyenne du véhicule, si ce dernier est exploité en cycle autoroutier, par exemple. Dans une telle situation, la vitesse du véhicule augmente et la consommation électrique 11 augmente donc également.

Au deuxième instant T2, c'est toujours le premier taux de compression 15 qui est utilisé. La consommation électrique 11 étant beaucoup plus forte alors que la génération d'énergie électrique par le groupe électrogène est toujours le même qu'au début du trajet, le niveau de charge 12 chute, tel que cela est visible sur la figure 2 à partir du deuxième instant T2. Pour pallier cela, l'indication de l'augmentation de la consommation électrique 11 du moteur électrique transmise au module de pilotage permet à ce dernier de faire basculer le moteur thermique selon le deuxième taux de compression 16. Ce dernier passe donc en position 1 sur la figure 2, tandis que le premier taux de compression passe en position 0 car il n'est plus utilisé.

Selon l'exemple de la figure 2, le deuxième taux de compression 16 est plus élevée que le premier taux de compression 15. Le groupe électrogène produit donc plus d'énergie électrique lorsqu'il fonctionne selon le deuxième taux de compression 16. L'apport en énergie électrique devient alors plus élevé et compense la consommation électrique du moteur électrique, et ce malgré le fait que le véhicule roule toujours à vitesse élevée, entraînant une consommation importante du moteur électrique. La chute du niveau de charge 12 constatée à partir du deuxième instant T2 redevient donc plus légère par la suite, de manière quasiment instantanée.

A partir d'un troisième instant T3, le véhicule roule de nouveau à vitesse modérée, par exemple en empruntant un axe extra-urbain, tout comme le laps de temps antérieur au premier instant T1. La consommation électrique 11 est donc moins importante que lorsque le véhicule roulait à vitesse élevée. Le moteur thermique fonctionne toujours selon le deuxième taux de compression 16, mais le module de pilotage, ayant reçu l'indication de la baisse de la consommation électrique 11, bascule de nouveau le moteur selon le premier taux de compression 15. On voit ainsi le niveau de charge 12 remonter du fait de l'apport en énergie élevé du groupe électrogène dû à la récente utilisation du deuxième taux de compression 16, puis le niveau de charge 12 repasse de nouveau en légère baisse, le moteur thermique fonctionnant de nouveau selon le premier taux de compression 15.

La chute du niveau de charge 12 se poursuit jusqu'à un quatrième instant T4. Le quatrième instant T4 correspond à l'instant où le niveau de charge 12 franchit le seuil bas d'état de charge 13 et devient donc inférieur à celui-ci. Le fait que le niveau de charge 12 devienne inférieur au seuil bas d'état de charge 13 signifie qu'il reste peu d'énergie dans l'élément de stockage d'énergie électrique pour alimenter le moteur électrique.

Ainsi, au quatrième instant T4, le module de pilotage reçoit l'indication du niveau de charge 12 de l'élément de stockage d'énergie électrique et envoie une commande au moteur thermique en réponse au fait que le niveau de charge 12 est inférieur au seuil bas d'état de charge 13. Le moteur thermique rebascule ainsi du premier taux de compression 15 vers le deuxième taux de compression 16.

De ce fait, à partir du quatrième instant T4, le niveau de charge 12 remonte grâce au basculement du moteur thermique vers le deuxième taux de compression 16.

Arrivé à un cinquième instant T5, le niveau de charge 12 franchit le seuil haut d'état de charge 14. Le module de pilotage détecte alors que le niveau de charge 12 a franchi le seuil haut d'état de charge 14. Le niveau de charge 12 est donc supérieur au seuil haut d'état de charge 14.

Afin de stopper la hausse du niveau de charge 12 pour ne pas faire fonctionner le moteur thermique en surrégime de manière superflue, le module de pilotage commande l'arrêt du moteur thermique. Cela s'illustre sur la figure 2 par le passage du deuxième taux de compression 16 en position 0. Au cinquième instant T5, le niveau de charge 12 monte durant un temps en latence, puis baisse de nouveau, l'élément de stockage d'énergie électrique ne recevant plus d'énergie provenant du groupe électrogène étant donné que le moteur thermique est éteint.

De ce fait, un sixième instant T6 est représenté sur la figure 2. La situation au sixième instant T6 est identique à la situation au premier instant T1, c'est-à-dire que le niveau de charge 12 franchit le seuil haut d'état de charge 14. Le moteur thermique est alors rallumé selon le premier taux de compression 15. La situation après le sixième instant T6 est alors identique à celle postérieure au premier instant T1, c'est-à-dire avec une faible consommation électrique 11 et une faible baisse du niveau de charge 12.

Le procédé de gestion 10 est ainsi apte à faire osciller le niveau de charge 12 de l'élément de stockage d'énergie électrique entre le seuil bas d'état de charge 13 et le seuil haut d'état de charge 14 de façon à ce que l'élément de stockage d'énergie électrique ne se décharge pas entièrement ni ne se charge complètement, afin que le moteur électrique puisse assurer la propulsion du véhicule en permanence, sans pour autant que le moteur thermique ne soit inutilement poussé à son rendement maximal.

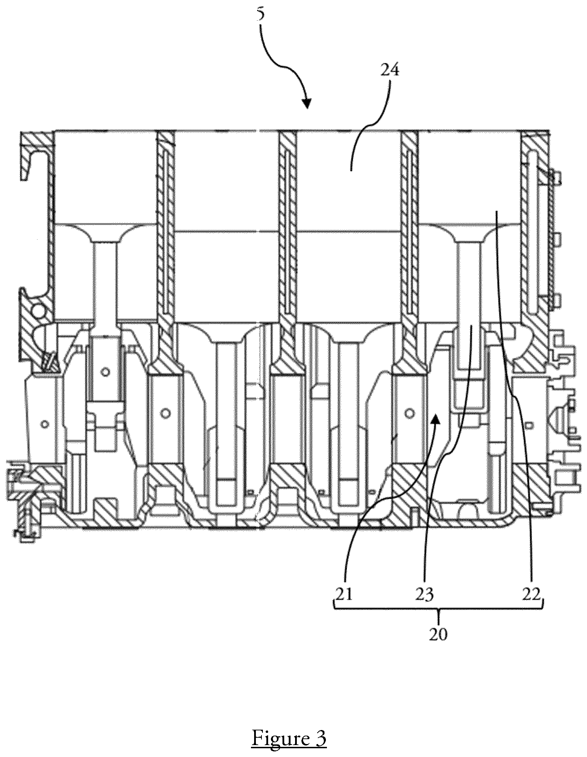

La figure 3 représente schématiquement un bas moteur du moteur thermique 5 à deux taux de compression. Un tel moteur thermique 5 comprend un équipage mobile 20. Ce dernier comprend au moins un vilebrequin 21, au moins un piston 22 et au moins une bielle 23 reliant le vilebrequin 21 au piston 22. Le mouvement de rotation du vilebrequin 21 est transformé en mouvement de translation du piston 22 au sein d'un cylindre 24, et ce grâce à la bielle 23. Le piston 22 se déplace entre un point mort haut et un point mort bas, le point mort haut variant en fonction du taux de compression utilisé pour le moteur thermique.

Les deux taux de compression du moteur thermique 5 résultent du fait qu'il est possible de modifier une hauteur des pistons 22 lorsque ceux-ci se déplacent dans leur cylindre 24 respectif. Ainsi, en modifiant leur hauteur, chacun des pistons 22 est apte à compresser le mélange comburé dans leur cylindre 24 respectif de manière plus ou moins forte. Plus la pression au sein de la chambre de combustion est élevée, plus la quantité d'énergie mécanique générée est élevée. Le point mort haut des pistons 22 est modifiée via chacune des bielles 23 liant les pistons 22 au vilebrequin 21.

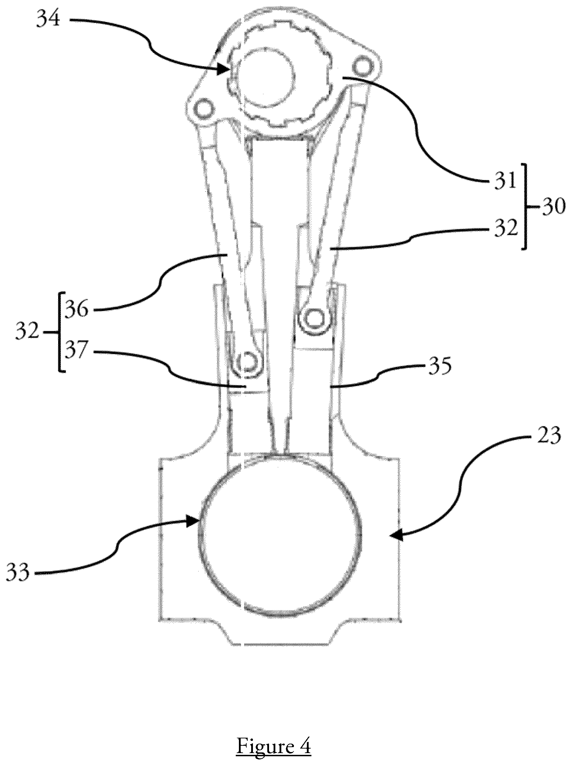

La figure 4 représente un exemple de conception de la bielle 23 permettant de faire varier la hauteur de pistons, et par conséquent le taux de compression. La bielle 23 comprend un pied de bielle 33 relié au vilebrequin et une tête de bielle 34 qui porte le piston.

La bielle 23 participe au changement du taux de compression en ce qu'elle comprend un moyen de réglage 30 de la hauteur du piston auquel la bielle 23 est liée. Le moyen de réglage comprend un excentrique 31 logé dans la tête de bielle 34, et deux organes de pilotage 32 disposés de part et d'autre d'un corps de bielle qui relie la tête de bielle 34 au pied de bielle 33, et qui s'étendent jusqu'au pied de bielle 33.

Plus particulièrement, l'organe de pilotage 32 comprend une tige 36 reliée à l'excentrique 31 d'une part, et à un coulisseau 37 d'autre part, apte à glisser au sein d'une chambre 35 formée dans le pied de bielle 33.

Lorsque, selon le procédé de gestion décrit précédemment, le module de pilotage bascule le moteur thermique vers le deuxième taux de compression, cela entraîne un déplacement du coulisseau 37 le long de la chambre 35, vers le deuxième orifice 34. Le déplacement du coulisseau 37 peut par exemple se faire par entrée d'huile, non représentée, exerçant une pression sur le coulisseau 37 et entraînant déplacement de celui-ci. Chacun des coulisseaux 37 des deux organes de pilotage 32 peut être déplacé de la sorte.

Le déplacement des coulisseaux 37 entraîne chacune des tiges 36, ce qui modifie ainsi la position de l'excentrique 31. Modifier la position de l'excentrique 31 modifie la position du point mort haut du piston, ce qui entraîne entraîner ce dernier à une hauteur plus élevée. De ce fait le taux de compression du moteur thermique s'en retrouve modifié. Afin de basculer d'un taux de compression à l'autre, l'huile est envoyée au sein de l'une ou l'autre des chambres 35, ce qui fait basculer le moteur thermique selon le premier taux de compression ou le deuxième taux de compression. La position de l'excentrique 31 est alors également modifiée, ce qui abaisse la hauteur du piston qui entraîne une pression moins élevée au sein de la chambre de combustion. L'entrée et la sortie d'huile sont contrôlées par le module de pilotage en fonction des indications reçues à propos du niveau de charge de l'élément de stockage électronique ou de la consommation électrique du moteur électrique.

Bien sûr, l'invention n'est pas limitée aux exemples qui viennent d'être décrits et de nombreux aménagements peuvent être apportés à ces exemples sans sortir du cadre de l invention telle que définie par les revendications.

L'invention, telle qu'elle vient d'être décrite, atteint bien le but qu'elle s'était fixée, et permet de proposer un procédé de gestion d'un niveau de charge d'un élément de stockage d'énergie électrique mis en œuvre par un groupe motopropulseur comprenant un moteur thermique à deux taux de compression assurant un apport en énergie permettant de répondre à un besoin de consommation d'un moteur électrique assurant la propulsion du véhicule.

## Revendications

1. Procédé de gestion (10) d'un niveau de charge (12) d'un élément de stockage d'énergie électrique (3) d'un groupe motopropulseur (1) d'un véhicule automobile hybride, ledit groupe motopropulseur (1) comprenant au moins un moteur électrique (2) entraînant à lui seul le véhicule, au moins un groupe électrogène (4) comprenant un moteur thermique (5) entraînant une génératrice électrique (6), le moteur thermique étant apte à fonctionner à au moins deux taux de compression, l'élément de stockage d'énergie électrique(3) stockant l'énergie électrique produite par la génératrice (6) et alimentant le moteur électrique (2), le procédé de gestion (10) contrôlant le moteur thermique (5) à un premier taux de compression (15) ou à un deuxième taux de compression (16) en fonction du niveau de charge (12) de l'élément de stockage d'énergie électrique (3) et optionnellement d'une consommation électrique (11) du moteur électrique (2), **caractérisé en ce qu'**on maintient le moteur thermique (5) au premier taux de compression (15) quand le niveau de charge (12) de l'élément de stockage d'énergie électrique (3) est supérieur à un seuil bas d'état de charge (13) et inférieur à un seuil haut d'état de charge (14), le seuil haut d'état de charge (14) étant supérieur au seuil bas d'état de charge (13), et on bascule le moteur thermique (5) au deuxième taux de compression (16), qui est le plus élevé des deux taux de compression, quand le niveau de charge (12) de l'élément de stockage d'énergie électrique (3) est inférieur au seuil bas d'état de charge (13).

2. Procédé de gestion (10) selon la revendication 1, au cours duquel on maintient le moteur thermique (5) au deuxième taux de compression (16) après que le niveau de charge (12) de l'élément de stockage d'énergie électrique devienne inférieur au seuil bas d'état de charge (13) et tant que le niveau de charge (12) de l'élément de stockage d'énergie électrique (3) est inférieur au seuil haut d'état de charge (14), et on interrompt le fonctionnement du moteur thermique (5) quand le niveau de charge (12) de l'élément de stockage d'énergie électrique (3) est supérieur au seuil haut d'état de charge (14).

3. Procédé de gestion (10) selon la revendication 1 ou 2, au cours duquel on maintient le moteur thermique (5) éteint tant que le niveau de charge (12) de l'élément de stockage d'énergie électrique (3) est supérieur au seuil haut d'état de charge (14), et on met en fonctionnement le moteur thermique (5) quand le niveau de charge (12) de l'élément de stockage d'énergie électrique (3) est inférieur au seuil haut d'état de charge (14).

4. Procédé de gestion (10) selon l'une quelconque des revendications 1 à 3, dans lequel le seuil bas d'état de charge (13) est compris entre 5% et 60% d'un niveau de charge maximal de l'élément de stockage d'énergie électrique (3).

5. Procédé de gestion (10) selon l'une quelconque des revendications 1 à 4, dans lequel le seuil haut d'état de charge (14) est compris entre 40% et 100% d'un niveau de charge maximal de l'élément de stockage d'énergie électrique (3).

6. Procédé de gestion (10) selon l'une quelconques des revendications 1 à 5, contrôlant le moteur thermique (5) au premier taux de compression (15) ou au deuxième taux de compression (16) en fonction de la consommation électrique du moteur électrique (2), tant que le niveau de charge (12) de l'élément de stockage d'énergie électrique (3) est inférieur au seuil haut d'état de charge (14) et supérieur au seuil bas d'état de charge (13).

7. Groupe motopropulseur (1) pour véhicule automobile hybride, comprenant au moins un moteur électrique (2) entraînant à lui seul le véhicule, au moins un groupe électrogène (4) comprenant un moteur thermique (5) entraînant une génératrice électrique (6), le moteur thermique étant apte à fonctionner à au moins deux taux de compression, un élément de stockage d'énergie électrique (3) stockant l'énergie électrique produite par la génératrice (6) et alimentant le moteur électrique (2), **caractérisé en ce que** le groupe motopropulseur comprend en outre un module de pilotage (8) configuré pour mettre en oeuvre un procédé de gestion (10) d'un niveau de charge (12) de l'élément de stockage d'énergie électrique (3) selon l'une quelconque des revendications précédentes.

8. Groupe motopropulseur (1) selon la revendication précédente, dans lequel le moteur thermique (5) comprend un équipage mobile (20) pourvu d'au moins un vilebrequin (21), d'au moins un piston (22) et d'au moins une bielle (23) liant le piston (22) au vilebrequin (21), ladite bielle (23) comprenant un moyen de réglage (30) d'une hauteur du piston (22) pour opérer le moteur thermique (5) au le premier taux de compression (15) ou au deuxième taux de compression (16).

9. Groupe motopropulseur (1) selon la revendication précédente, dans lequel le moyen de réglage (30) de la hauteur du piston (22) comprend au moins un excentrique (31) qui porte un axe du piston (22) et dont la position est contrôlée par deux organes de pilotage (32) portés par la bielle (23).

10. Véhicule automobile comprenant un groupe motopropulseur (1) selon l'une quelconque des revendications 7 à 9.

## Patentansprüche

1. Steuerungsverfahren (10) eines Ladezustands (12) eines elektrischen Energiespeicherelements (3) eines Antriebssystems (1) eines Hybridkraftfahrzeugs, wobei das Antriebssystem (1) mindestens einen Elektromotor (2) umfasst, der das Fahrzeug allein antreibt, mindestens ein Generatoraggregat (4), das einen Verbrennungsmotor (5) umfasst, der einen elektrischen Generator (6) antreibt, wobei der Verbrennungsmotor mit mindestens zwei Verdichtungsverhältnissen betrieben werden kann, wobei das elektrische Energiespeicherelement (3) die vom Generator (6) erzeugte elektrische Energie speichert und den Elektromotor (2) speist, wobei das Steuerungsverfahren (10) den Verbrennungsmotor (5) auf ein erstes Verdichtungsverhältnis (15) oder ein zweites Verdichtungsverhältnis (16) in Abhängigkeit vom Ladezustand (12) des elektrischen Energiespeicherelements (3) und optional von einem Stromverbrauch (11) des Elektromotors (2) steuert, **dadurch gekennzeichnet, dass** der Verbrennungsmotor (5) bei dem ersten Verdichtungsverhältnis (15) betrieben wird, wenn der Ladezustand (12) des elektrischen Energiespeicherelements (3) über einem unteren Ladezustandsschwellenwert (13) und unter einem oberen Ladezustandsschwellenwert (14) liegt, wobei der obere Ladezustandsschwellenwert (14) über dem unteren Ladezustandsschwellenwert (13) liegt, und der Verbrennungsmotor (5) auf das zweite Verdichtungsverhältnis (16) umgeschaltet wird, das das höhere der beiden Verdichtungsverhältnisse ist, wenn der Ladezustand (12) des elektrischen Energiespeicherelements (3) unter dem unteren Ladezustandsschwellenwert (13) liegt.

2. Steuerungsverfahren (10) nach Anspruch 1, bei dem der Verbrennungsmotor (5) bei dem zweiten Verdichtungsverhältnis (16) betrieben wird, nachdem der Ladezustand (12) des elektrischen Energiespeicherelements (3) unter den unteren Ladezustandsschwellenwert (13) fällt und solange der Ladezustand (12) des elektrischen Energiespeicherelements (3) unter dem oberen Ladezustandsschwellenwert (14) liegt, und bei dem der Betrieb des Verbrennungsmotors (5) unterbrochen wird, wenn der Ladezustand (12) des elektrischen Energiespeicherelements (3) über dem oberen Ladezustandsschwellenwert (14) liegt.

3. Steuerungsverfahren (10) nach Anspruch 1 oder 2, bei dem der Verbrennungsmotor (5) ausgeschaltet bleibt, solange der Ladezustand (12) des elektrischen Energiespeicherelements (3) über dem oberen Ladezustandsschwellenwert (14) liegt, und der Verbrennungsmotor (5) in Betrieb gesetzt wird, wenn der Ladezustand (12) des elektrischen Energiespeicherelements (3) unter dem oberen Ladezustandsschwellenwert (14) liegt.

4. Steuerungsverfahren (10) nach einem der Ansprüche 1 bis 3, bei dem der untere Ladezustandsschwellenwert (13) zwischen 5% und 60% eines maximalen Ladezustands des elektrischen Energiespeicherelements (3) liegt.

5. Steuerungsverfahren (10) nach einem der Ansprüche 1 bis 4, bei dem der obere Ladezustandsschwellenwert (14) zwischen 40% und 100% eines maximalen Ladezustands des elektrischen Energiespeicherelements (3) liegt.

6. Steuerungsverfahren (10) nach einem der Ansprüche 1 bis 5, das den Verbrennungsmotor (5) bei dem ersten Verdichtungsverhältnis (15) oder bei dem zweiten Verdichtungsverhältnis (16) in Abhängigkeit vom Stromverbrauch des Elektromotors (2) steuert, solange der Ladezustand (12) des elektrischen Energiespeicherelements (3) unter dem oberen Ladezustandsschwellenwert (14) und über dem unteren Ladezustandsschwellenwert (13) liegt.

7. Antriebssystem (1) für ein Hybridkraftfahrzeug mit mindestens einem Elektromotor (2), der allein das Fahrzeug antreibt, mindestens einem Generatoraggregat (4) mit einem Verbrennungsmotor (5), der einen elektrischen Generator (6) antreibt, wobei der Verbrennungsmotor mit mindestens zwei Verdichtungsverhältnissen betrieben werden kann, einem elektrischen Energiespeicherelement (3), das die vom Generator (6) erzeugte elektrische Energie speichert und den Elektromotor (2) versorgt, **dadurch gekennzeichnet, dass** das Antriebssystem ferner ein Steuermodul (8) aufweist, das so konfiguriert ist, dass es ein Steuerungsverfahren (10) zur Steuerung eines Ladezustands (12) eines elektrischen Energiespeicherelements (3) nach einem der vorhergehenden Ansprüche durchführt.

8. Antriebssystem (1) nach dem vorhergehenden Anspruch, wobei der Verbrennungsmotor (5) eine bewegliche Baugruppe (20) umfasst, die mit mindestens einer Kurbelwelle (21), mindestens einem Kolben (22) und mindestens einer Pleuelstange (23) ausgestattet ist, welche den Kolben (22) mit der Kurbelwelle (21) verbindet, wobei die Pleuelstange (23) ein Mittel (30) zur Einstellung der Höhe des Kolbens (22) umfasst, um den Verbrennungsmotor (5) bei dem ersten Verdichtungsverhältnis (15) oder bei dem zweiten Verdichtungsverhältnis (16) zu betreiben.

9. Antriebssystem (1) nach dem vorhergehenden Anspruch, bei dem das Mittel (30) zur Einstellung der Höhe des Kolbens (22) mindestens einen Exzenter (31) umfasst, der eine Achse des Kolbens (22) trägt und dessen Position durch zwei Steuerorgane (32) steuerbar ist, die von der Pleuelstange (23) getragen werden.

10. Kraftfahrzeug, umfassend ein Antriebssystem (1) nach einem der Ansprüche 7 bis 9.

## Claims

1. Management method (10) of a charge level (12) of an electric energy storage element (3) of a powertrain (1) of a hybrid motor vehicle, said powertrain (1) comprising at least one electric motor (2) driving the vehicle alone, at least one generator set (4) comprising a heat engine (5) driving an electric generator (6), the heat engine being able to operate at at least two compression ratios, the electric energy storage element (3) storing the electrical energy produced by the generator (6) and supplying the electric motor (2), the management method (10) controlling the heat engine (5) at a first compression ratio (15) or at a second compression ratio (16) depending on the level of charge (12) of the electrical energy storage element (3) and optionally on an electrical consumption (11) of the electric motor (2), **characterised in that** the heat engine (5) is maintained at the first compression ratio (15) when the level of charging (12) of the electrical energy storage element (3) is greater than a low state of charge threshold (13) and less than a high state of charge threshold (14), the high state of charge threshold (14) being greater than the low state of charge threshold (13), and the heat engine (5) is switched to the second compression ratio (16) which is the higher of the two compression ratios, when the level of charge (12) of the electrical energy storage element (3) is less than the low state of charge threshold (13).

2. Management method (10) according to claim 1, wherein the heat engine (5) is maintained at the second compression ratio (16) after the charge level (12) of the electric energy storage element becomes lower than the low state of charge threshold (13) and as long as the charge level (12) of the electric energy storage element (3) is lower than the high state of charge threshold (14), and the operation of the heat engine (5) is interrupted when the charge level (12) of the electric energy storage element (3) is higher than the high state of charge threshold (14).

3. Management method (10) according to claim 1 or 2, wherein the heat engine (5) is kept off as long as the charge level (12) of the electric energy storage element (3) is higher than the high state of charge threshold (14), and the heat engine (5) is turned on when the charge level (12) of the electric energy storage element (3) is lower than the high state of charge threshold (14).

4. Management method (10) according to any one of claims 1 to 3, wherein the low state of charge threshold (13) is between 5% and 60% of a maximum charge level of the electric energy storage element (3).

5. Management method (10) according to any one of claims 1 to 4, wherein the high state of charge threshold (14) is between 40% and 100% of a maximum charge level of the electric energy storage element (3).

6. Management method (10) according to any one of claims 1-5, controlling the heat engine (5) at the first compression ratio (15) or the second compression ratio (16) according to the power consumption of the electric motor (2), as long as the charge level (12) of the electric energy storage element (3) is lower than the high state of charge threshold (14) and higher than the low state of charge threshold (13).

7. Powertrain (1) for a hybrid motor vehicle, comprising at least one electric motor (2) driving the vehicle alone, at least one generator set (4) comprising a heat engine (5) driving an electric generator (6), the heat engine being able to operate at at least two compression ratios, an electric energy storage element (3) storing the electric energy produced by the generator (6) and powering the electric motor (2), **characterised in that** the powertrain further comprises a control module (8) configured to implement a method for managing (10) a charge level (12) of 1 electric energy storage element (3) according to any one of the preceding claims.

8. Powertrain (1) according to the preceding claim, wherein the heat engine (5) comprises a movable assembly (20) provided with at least one crankshaft (21), at least one piston (22) and at least one connecting rod (23) connecting the piston (22) to the crankshaft (21), said connecting rod (23) comprising a means (30) for adjusting a height of the piston (22) to operate the heat engine (5) at the first compression ratio (15) or at the second compression ratio (16).

9. Powertrain (1) according to the preceding claim, wherein the means (30) for adjusting the height of the piston (22) comprises at least one eccentric (31) which carries an axis of the piston (22) and whose position is controlled by two control members (32) carried by the connecting rod (23).

10. Motor vehicle comprising a powertrain (1) according to any one of claims 7 to 9.
